(19) Europäisches Patentamt
European Patent Office
Office européen des brevets

(11) **EP 4 704 478 A1**

(12) **EUROPEAN PATENT APPLICATION**
published in accordance with Art. 153(4) EPC

(43) Date of publication:
04.03.2026 Bulletin 2026/10

(21) Application number: 24795920.8

(22) Date of filing: 17.04.2024

(51) International Patent Classification (IPC):
*H04W 72/0446* (2023.01)

(52) Cooperative Patent Classification (CPC):
H04L 5/00; H04W 72/0446; H04W 72/12;
H04W 72/231

(86) International application number:
PCT/CN2024/088198

(87) International publication number:
WO 2024/222539 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.04.2023 CN 202310443822

(71) Applicant: Apogee Networks, LLC
Dallas, TX 75201 (US)

(72) Inventors:
• WU, Lu
Shanghai 201206 (CN)
• SONG, Shulin
Shanghai 201206 (CN)
• ZHANG, Xiaobo
Shanghai 201206 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **METHOD AND DEVICE FOR NODE USED FOR WIRELESS COMMUNICATION**

(57) The present application discloses a method and device for a node used for wireless communication. A first node receives a first CSI reporting configuration, the first CSI reporting configuration indicating a first RS resource set, and sends first CSI reporting. A first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource; a target power control offset is a ratio of a PDSCH EPRE used in the calculation of the first CSI reporting to the EPRE of the first CSI-RS resource, candidates of the target power control offset comprises a first power control offset and a second power control offset, and both the first power control offset and the second power control offset are indicated to the first CSI-RS resource. The method can select appropriate CSI-RS EPREs, and flexibly adjust CSI reporting.

FIG. 1

# EP 4 704 478 A1

## Description

### Technical Field

The present application relates to transmission methods and devices in wireless communication systems, in particular to a measurement scheme and device in a wireless communication system.

### Background Art

Network Energy Saving (NES) is of great significance for environmental sustainability, the reduction of the impact on environment (greenhouse gas emissions), and the saving of operating costs. As 5G (the 5th Generation Partnership Project) becomes more prevalent across industries and geographic regions, much higher data rates are required to handle more advanced services and applications (such as XR), resulting in increasingly dense networks, and the usage of more antennas, greater bandwidth, and more frequency bands. In order to keep the impact of 5G on the environment within a controllable range, new solutions need to be studied to improve network energy saving. Therefore, the 3rd Generation Partnership Project (3GPP) RAN#94 meeting approved a study item (SI) of the "Study on network energy savings", which studies technical enhancements in time domain, frequency domain, spatial domain, power domain, etc.

In the existing new radio (NR) system, spectrum resources are statically divided into a frequency division duplexing (FDD) spectrum and a time division duplexing (TDD) spectrum. For the TDD spectrum, both a base station and user equipment operate in half-duplex mode. Such a half-duplex mode avoids self-interference and can mitigate the impact of cross-link interference, but also results in the decrease of resource utilization and the increase of latency. To address these problems, supporting flexible duplex modes on the TDD spectrum or the FDD spectrum becomes a possible solution. At the 3GPP radio access network (RAN) 1 #103e meeting, research on duplex technology was agreed, wherein a subband non-overlapping full duplex was proposed, which supports base station equipment to perform sending and receiving on two subbands simultaneously. Communications in this mode will suffer from serious interference, including self- interference and cross-link interference.

### Summary of the Invention

In an existing system, UE determines CSI reporting according to a channel state information (CSI) reporting configuration and a reference signal (RS) resource. An assumed ratio of a physical downlink shared channel (PDSCH) energy per resource element (EPRE) to a CSI-RS EPRE is used in the calculation of the CSI reporting. The determination of this ratio is a key issue.

In response to the above-mentioned problems, the present application discloses a solution. It should be noted that in the description of the present application, an energy-saving and flexible duplex mode is only used as two typical application scenarios or examples. The present application may also be applied to non-energy-saving application scenarios (comprising but not limited to a capacity enhancement system, a near field communication system, unlicensed band communication, Internet of Things (IoT), an ultra-reliable low-latency communication (URLLC) network, Vehicle-to-Everything, etc.), as well as application scenarios under a half-duplex mode (comprising but not limited to TDD, FDD, etc.). Furthermore, adopting a unified design scheme for different scenarios (comprising but not limited to an energy-saving scenario, a non-energy-saving scenario, SBFD, other flexible duplex modes or full-duplex modes, variable link direction modes, traditional duplex modes, half-duplex modes, etc.) also helps to reduce hardware complexity and cost. In an absence of conflict, embodiments and features in the embodiments in any node of the present application can be applied to any other node, and vice versa. In the absence of conflicts, the embodiments and features in the embodiments of the present application may be arbitrarily combined with each other.

In particular, the explanation of terminology, nouns, functions, and variables in the present application (if not specified) can refer to the definitions in the TS36 series, TS38 series, and TS37 series of the specification protocol of 3GPP. If necessary, 3GPP standards TS38.211, TS38.212, TS38.213, TS38.214, TS38.215, TS38.321, TS38.331, TS38.305, TS38.304, and TS37.355 can be referred to for assisting in understanding the present application.

The present application discloses a method used in a first node for wireless communication, comprising:

> receiving a first CSI reporting configuration, the first CSI reporting configuration indicating a first RS resource set, and the first RS resource set comprising one or more RS resources; and
> sending first CSI reporting,
> wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, problems to be solved in the present application comprise: an assumed ratio of a PDSCH EPRE to a CSI-RS EPRE in the calculation of the CSI reporting, wherein the determination of this ratio is a key problem.

As one embodiment, the benefits of using the above method are that, by determining an appropriate assumed ratio of the PDSCH EPRE to the CSI-RS EPRE, CSI reporting is flexibly adjusted.

As one embodiment, the benefits of the present application comprise: a transmission capacity is increased.

As one embodiment, the benefits of the present application comprise: transmission efficiency is improved.

As one embodiment, the benefits of the present application comprise: flexibility of the system is increased.

As one embodiment, the benefits of the present application comprise: network energy is saved.

According to one aspect of the present application, which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

As one embodiment, the above method determines the target power control offset by whether the first time domain resource belongs to the reference time domain resource set, and the assumed ratio of the PDSCH EPRE to the CSI-RS EPRE is flexibly adjusted.

According to one aspect of the present application, it is characterized by comprising:

receiving a first information block,
wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

As one embodiment, in the above method, at least one symbol in the reference time domain resource set is configured as the DL by the higher-layer parameter, thereby improving a UL transmission capacity.

According to one aspect of the present application, it is characterized by comprising:

receiving a second information block,
wherein the second information block is used for determining a reference frequency domain resource set; and UL transmission in one or more DL symbols of the reference time domain resource set belongs to the reference frequency domain resource set in frequency domain.

As one embodiment, the above method achieves simultaneous receiving and sending of base station measurement by using the reference frequency domain resource set.

According to one aspect of the present application, it is characterized by: the first CSI reporting configuration further indicates which of the first power control offset and the second power control offset the target power control offset is equal to.

According to one aspect of the present application, it is characterized by comprising: receiving first signaling; and wherein the first signaling indicates which of the first power control offset and the second power control offset the target power control offset is equal to.

As one embodiment, the above method dynamically adjusts the assumed ratio of the PDSCH EPRE to the CSI-RS EPRE by using the first signaling to indicate the target power control offset, thereby improving flexibility of the system.

According to one aspect of the present application, it is characterized by comprising:

receiving a third information block and a fourth information block,
wherein the third information block indicates the first power control offset, and the fourth information block indicates the second power offset; and at least the third information block of the third information block and the fourth information block belongs to configuration information of the first CSI-RS resource.

As one embodiment, the benefits of the above method comprise: having good backward compatibility, and simplifying a system design.

The present application discloses a method used in a second node for wireless communication, comprising:

sending a first CSI reporting configuration, the first CSI reporting configuration indicating a first RS resource set, and the first RS resource set comprising one or more RS resources; and

receiving first CSI reporting,

wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

According to one aspect of the present application, which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

According to one aspect of the present application, it is characterized by comprising:

sending a first information block,

wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

According to one aspect of the present application, it is characterized by comprising:

sending a second information block,

wherein the second information block is used for determining a reference frequency domain resource set; and UL transmission in one or more DL symbols of the reference time domain resource set belongs to the reference frequency domain resource set in frequency domain.

According to one aspect of the present application, it is characterized by: the first CSI reporting configuration further indicates which of the first power control offset and the second power control offset the target power control offset is equal to.

According to one aspect of the present application, it is characterized by comprising:

sending first signaling,

wherein the first signaling indicates which of the first power control offset and the second power control offset the target power control offset is equal to.

According to one aspect of the present application, it is characterized by comprising:

sending a third information block and a fourth information block,

wherein the third information block indicates the first power control offset, and the fourth information block indicates the second power offset; and at least the third information block of the third information block and the fourth information block belongs to configuration information of the first CSI-RS resource.

The present application discloses a first node device for wireless communication, comprising:

a first receiver receiving a first CSI reporting configuration, the first CSI reporting configuration indicating a first RS resource set, and the first RS resource set comprising one or more RS resources; and

a first transmitter sending first CSI reporting,

wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

The present application discloses a second node device for wireless communication, characterized by comprising:

a second transmitter sending a first CSI reporting configuration, the first CSI reporting configuration indicating a first RS resource set, and the first RS resource set comprising one or more RS resources; and
a second receiver receiving first CSI reporting,
wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, compared with the traditional solution, the present application has the following advantages:

- the assumed ratio of the PDSCH EPRE to the CSI-RS EPRE in the calculation of the CSI reporting is flexibly adjusted;
- the assumed ratio of the PDSCH EPRE to the CSI-RS EPRE in the calculation of the CSI reporting is dynamically adjusted;
- the CSI reporting is flexibly adjusted for different application scenarios;
- the accuracy of CSI reporting is improved;
- transmission efficiency is improved;
- the UL transmission capacity is improved;
- system performance is improved;
- network energy is saved.

## Brief Description of the Drawings

Other features, objects and advantages of the present application will become more apparent by reading the detailed description of non-limiting embodiments with reference to the following drawings:

FIG. 1 shows a flowchart of a first CSI reporting configuration and first CSI reporting according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of wireless transmission according to one embodiment of the present application;
FIG. 6 shows a schematic diagram of a relationship between a first time domain resource, a reference time domain resource set, and a target power control offset according to one embodiment of the present application;
FIG. 7 shows a schematic diagram of a first information block and a reference time domain resource set according to one embodiment of the present application;
FIG. 8 shows a schematic diagram of a second information block and a reference frequency domain resource set according to one embodiment of the present application;
FIG. 9 shows a schematic diagram of a first CSI reporting configuration indicating a target power control offset according to one embodiment of the present application;

FIG. 10 shows a schematic diagram of first signaling indicating a target power control offset according to one embodiment of the present application;

FIG. 11 shows a schematic diagram of a third information block indicating a first power control offset and a fourth information block indicating a second power offset according to one embodiment of the present application;

FIG. 12 shows a structural block diagram of a processing apparatus used in a first node device according to one embodiment of the present application; and

FIG. 13 shows a structural block diagram of a processing device for a second node device according to one embodiment of the present application.

## Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

## Embodiment 1

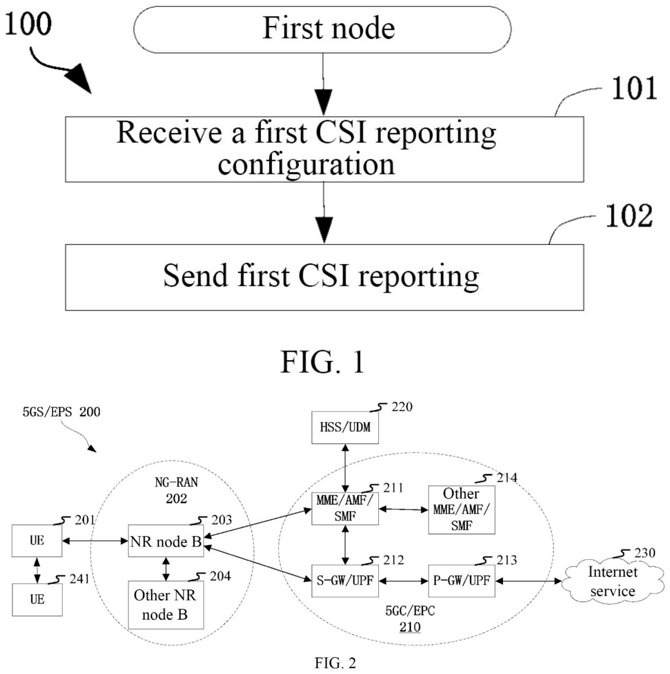

Embodiment 1 illustrates a flowchart of a first CSI reporting configuration and first CSI reporting according to one embodiment of the present application, as shown in FIG. 1. In 100 shown in FIG. 1, each block represents one step.

In Embodiment 1, the first node in the present application receives a first CSI reporting configuration in step 101, the first CSI reporting configuration indicating a first RS resource set, and the first RS resource set comprising one or more RS resources; and sends first CSI reporting in step 102, wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, the first channel status information (CSI) reporting configuration is carried by higher-layer signaling.

As one embodiment, the first CSI reporting configuration is carried by RRC signaling.

As one embodiment, the first CSI reporting configuration comprises one RRC information element (IE).

As one embodiment, the first CSI reporting configuration comprises one or more RRC IEs.

As one embodiment, the first CSI reporting configuration is IE CSI-ReportConfig.

As one embodiment, a name of the first CSI reporting configuration comprises CSI-ReportConfig.

As one embodiment, the first CSI reporting configuration comprises one CSI resource configuration, and the one CSI resource configuration is used for configuring the first RS resource set.

As one sub-embodiment of the above embodiment, the one CSI resource configuration is one IE CSI-ResourceConfig.

As one sub-embodiment of the above embodiment, the first CSI reporting configuration comprises a resourcesForChannelMeasurement field, and the resourcesForChannelMeasurement field comprised in the first CSI reporting configuration indicates the one CSI resource configuration.

As one embodiment, the first CSI reporting configuration comprises a plurality of CSI resource configurations, and one CSI resource configuration of the plurality of CSI resource configurations is used for configuring the first RS resource set.

As one embodiment, one CSI resource configuration used for configuring the first RS resource set comprises an identifier or index of each RS resource in the first RS resource set.

As one embodiment, one CSI resource configuration used for configuring the first RS resource set comprises an identifier of each RS resource in the first RS resource set.

As one embodiment, one CSI resource configuration used for configuring the first RS resource set is used for configuring each RS resource in the first RS resource set.

As one embodiment, one CSI resource configuration used for configuring the first RS resource set comprises configuration information of each RS resource in the first RS resource set.

As one embodiment, the first CSI reporting configuration comprises a resourcesForChannelMeasurement field, and the resourcesForChannelMeasurement field comprised in the first CSI reporting configuration is used for indicating the first RS resource set.

As one embodiment, specific definitions of IE CSI-ReportConfig, resourcesForChannelMeasurement, and IE CSI-ResourceConfig refer to Section 6.3.2 of 3GPP TS 38.331.

As one embodiment, the first CSI reporting configuration comprises a reportConfigType field. The reportConfigType field in the first CSI reporting configuration indicates which of periodic, semi-persistent on PUSCH, semi-persistent on PUCCH, or aperiodic the first CSI reporting is.

As one embodiment, a channel measurement resource of the first CSI reporting configuration comprises the first RS resource set.

As one embodiment, the first RS resource set is used for channel measurement of the first CSI reporting.

As one embodiment, the first RS resource set comprises one RS resource.

As one embodiment, the first RS resource set comprises a plurality of RS resources.

As one embodiment, the first RS resource set comprises at least one channel state information-reference signal (CSI-RS) resource.

As one embodiment, the first RS resource set comprises a plurality of CSI-RS resources.

As one embodiment, the first RS resource set comprises one or both of a CSI-RS resource or a synchronization signal/physical broadcast channel (SS/PBCH) block resource.

As one embodiment, any RS resource in the first RS resource set is a CSI-RS resource or an SS/PBCH block resource.

In one embodiment, the first RS resource set comprises one or both of a CSI-RS resource or an SSB resource.

As one embodiment, any RS resource in the first RS resource set is a CSI-RS resource or an SSB resource.

As one embodiment, any RS resource in the first RS resource set is a CSI-RS resource.

As one embodiment, the SSB refers to a synchronization signal block.

As one embodiment, the SSB refers to a synchronization signal/physical broadcast channel block.

Typically, the CSI-RS resource in the present application is a non-zero power (NZP) CSI-RS resource.

As one embodiment, the first RS resource set comprises at least one periodic or semi-persistent CSI-RS resource.

As one embodiment, the first RS resource set comprises at least one periodic CSI-RS resource.

As one embodiment, the first RS resource set comprises at least one semi-persistent CSI-RS resource.

As one embodiment, any RS resource in the first RS resource set is a periodic or semi-persistent CSI-RS resource.

As one embodiment, any RS resource in the first RS resource set is a periodic CSI-RS resource.

As one embodiment, any RS resource in the first RS resource set is a semi-persistent CSI-RS resource.

As one embodiment, a period and a slot offset of a CSI-RS resource in the first RS resource set are configured by a parameter CSI-ResourcePeriodicityAndOffset in a higher-layer parameter reportSlotConfig. A unit of the period of the CSI-RS resource in the first RS resource set is slot.

As one embodiment, the first CSI reporting configuration comprises a higher-layer parameter *timeRestriction-ForChannelMeasurements,* and the higher-layer parameter *timeRestrictionForChannelMeasurements* in the first CSI reporting configuration is set to *"notConfigured".*

As one embodiment, the first CSI reporting configuration is used for configuring one piece of aperiodic CSI reporting, and the first CSI reporting is the one piece of aperiodic CSI reporting configured by the first CSI reporting configuration.

As one embodiment, the first CSI reporting configuration is used for configuring one piece of periodic or semi-persistent CSI reporting. The first CSI reporting is a reporting instance of the periodic or semi-persistent CSI reporting configured by the first CSI reporting configuration.

As one embodiment, the first CSI reporting configuration is used for configuring one piece of periodic CSI reporting, and the first CSI reporting is a reporting instance of periodic CSI reporting configured by the first CSI reporting configuration.

As one embodiment, the first CSI reporting configuration is used for configuring one piece of semi-persistent CSI reporting, and the first CSI reporting is a reporting instance of semi-persistent CSI reporting configured by the first CSI reporting configuration.

As one embodiment, the first CSI reporting is transmitted on a physical channel.

As one embodiment, the first CSI reporting is transmitted on a physical uplink shared channel (PUSCH).

As one embodiment, the first CSI reporting is transmitted on a physical uplink control channel (PUCCH).

As one embodiment, the first CSI reporting is periodic or semi-persistent.

As one embodiment, the first CSI reporting is semi-persistent, and the first CSI reporting is activated by a MAC CE.

As one embodiment, a name of the MAC CE activating the first CSI reporting comprises SP CSI reporting on PUCCH Activation MAC CE.

As one embodiment, the first CSI reporting is aperiodic, the first CSI reporting is triggered by one piece of downlink control information (DCI), the one piece of DCI comprises a CSI request field, the CSI request field of the one piece of DCI is used for indicating one trigger state, and the one trigger state indicates the first CSI reporting configuration.

As one embodiment, the first CSI reporting is semi-persistent. When the first node receives one activation command, the first node sends the first CSI reporting on a PUCCH.

As one embodiment, the one activation command comprises an SP CSI reporting on PUCCH Activation MAC CE.

As one embodiment, the first CSI reporting is semi-persistent. When the first node is triggered by the one piece of DCI, the first node sends the first CSI reporting on a PUSCH.

As one embodiment, at least one RS resource in the first RS resource set is used in an energy saving mode of the second node.

As one embodiment, at least one RS resource in the first RS resource set is used in an energy saving mode of a cell.

As one embodiment, the first CSI reporting configuration further indicates a report quantity comprised in the first CSI reporting.

As one embodiment, the first CSI reporting configuration comprises a reportQuantity field, and the field in the first CSI reporting configuration indicates a report quantity comprised in the first CSI reporting.

As one embodiment, the report quantity comprised in the first CSI reporting comprises at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), layer 1 reference signal received power (L1-RSRP), or a layer 1 signal-to-noise and interference ratio (L1-SINR).

As one embodiment, the first CSI reporting comprises CRI or an SSBRI, and L1-RSRP.

As one embodiment, the first CSI reporting comprises CRI or an SSBRI, and L1-SINR.

As one embodiment, the first CSI reporting at least comprises a CRI.

As one embodiment, the first CSI reporting at least comprises a CQI.

As one embodiment, the first CSI reporting at least comprises a CRI and a CQI.

As one embodiment, the first CSI reporting comprises a CRI, an RI, a PMI, and a CQI.

As one embodiment, the first CSI reporting comprises a CRI, an RI, an LI, a PMI, and a CQI.

As one embodiment, the first CSI reporting comprises a CRI, an RI, and a PMI.

As one embodiment, the first CSI reporting comprises a CRI, an RI, and a CQI.

As one embodiment, the first CSI reporting comprises a CRI and an RSRP.

As one embodiment, the first CSI reporting comprises a CRI and L1-RSRP.

As one embodiment, the first CSI reporting comprises a CRI and L1-SINR.

As one embodiment, the first CSI reporting at least comprises a CRI, the CRI comprised in the first CSI reporting is used for indicating a first CSI-RS resource, and the first CSI-RS resource is one RS resource in the first RS resource set.

As one embodiment, one RS resource belongs to a plurality of slots in time domain, wherein a part within a slot is referred to as one transmission opportunity of the RS resource.

As one embodiment, one RS resource is a periodic RS resource or a semi-persistent RS resource, wherein a part within a period is referred to as one transmission opportunity of the RS resource.

As one embodiment, of all transmission opportunities for each RS resource in the first RS resource set, only the first opportunity set is used for obtaining channel measurement used for calculating the first CSI reporting.

As one embodiment, the first opportunity set comprises one or more transmission opportunities, which are not later than that of a CSI reference resource of the first CSI reporting, of at least one RS resource in the first RS resource set.

As one embodiment, the first opportunity set comprises all transmission opportunities, which are not later than that of a CSI reference resource of the first CSI reporting, of at least one RS resource in the first RS resource set.

As one embodiment, the first opportunity set comprises at least one transmission opportunity, which is not later than that of a CSI reference resource of the first CSI reporting, of each RS resource in the first RS resource set.

As one embodiment, the first opportunity set comprises all transmission opportunities, which are not later than that of a CSI reference resource of the first CSI reporting, of each RS resource in the first RS resource set.

As one embodiment, the first opportunity set comprises at least one transmission opportunity, which is not later than that of a CSI reference resource of the first CSI reporting, of the first CSI-RS resource.

As one embodiment, the first opportunity set comprises one transmission opportunity, which is not later than that of a CSI reference resource of the first CSI reporting, of the first CSI-RS resource.

As one embodiment, the first opportunity set comprises the latest one transmission opportunity, which is not later than that of a CSI reference resource of the first CSI reporting, of the first CSI-RS resource.

As one embodiment, the first opportunity set comprises all transmission opportunities, which are not later than that of a CSI reference resource of the first CSI reporting, of the first CSI-RS resource.

As one embodiment, the meaning of "one transmission opportunity of one RS resource is later than that of a CSI reference resource of the first CSI reporting" comprises: the CSI reference resource of the first CSI reporting is a first downlink slot, the one transmission opportunity of the one RS resource belongs to one downlink slot, and the one downlink slot to which the one transmission opportunity of the one RS resource belongs is later than the first downlink slot. The meaning of "one transmission opportunity of one RS resource is not later than that of a CSI reference resource of the first CSI reporting" comprises: the CSI reference resource of the first CSI reporting is a first downlink slot, the one transmission opportunity of the one RS resource belongs to one downlink slot, and the one downlink slot to which the one transmission opportunity of the one RS resource belongs is not later than the first downlink slot.

As one embodiment, the meaning of "one transmission opportunity of one RS resource is later than that of a CSI reference resource of the first CSI reporting" comprises: a start moment of the one transmission opportunity of the one RS resource is later than an end moment of the CSI reference resource of the first CSI reporting. The meaning of "one transmission opportunity of one RS resource is not later than that of a CSI reference resource of the first CSI reporting" comprises: an end moment of the one transmission opportunity of the one RS resource is not later than a start moment of the CSI reference resource of the first CSI reporting.

As one embodiment, the CSI reference resource of the first CSI reporting is a group of downlink physical resource blocks (PRBs) corresponding to a band related to the first CSI reporting in frequency domain.

As one embodiment, the CSI reference resource of the first CSI reporting is a frequency domain resource related to the first CSI reporting in frequency domain.

As one embodiment, the CSI reference resource of the first CSI reporting is a subband or wideband related to the first CSI reporting in frequency domain.

As one embodiment, the CSI reference resource of the first CSI reporting and a frequency domain resource related to the first CSI reporting belong to the same bandwidth part (BWP) in frequency domain.

As one embodiment, a band related to the first CSI reporting is a band where CSI indicated by the first CSI reporting is located.

As one embodiment, a frequency domain resource related to the first CSI reporting is a frequency domain resource where CSI indicated by the first CSI reporting is located.

As one embodiment, the CSI reference resource of the first CSI reporting is a first downlink slot in time domain.

As one embodiment, the CSI reference resource of the first CSI reporting is one downlink slot.

As one embodiment, the CSI reference resource of the first CSI reporting depends on a second uplink slot.

As one embodiment, the first downlink slot depends on the second uplink slot.

As one embodiment, the second uplink slot is a slot n'.

As one embodiment, the second uplink slot is a slot for sending the first CSI reporting.

As one embodiment, the second uplink slot is a slot where the PUCCH carrying the first CSI reporting is located.

As one embodiment, the second uplink slot is a slot where the PUSCH carrying the first CSI reporting is located.

As one embodiment, the description of the CSI reference resource of the first CSI reporting refers to Section 5.2.2.5 of 3GPP TS38.214.

As one embodiment, the first downlink slot is a slot $n - n_{CSI\_ref} - K_{offset} \cdot \frac{2^{\mu_{DL}}}{2^{\mu_{K_{offset}}}}$, where $K_{offset}$ is configured by higher-layer signaling, $\mu_{Koffset}$ is a subcarrier spacing configuration of the $K_{offset}$.

As one embodiment, $n_{CSI\_ref}$ is a minimum value that is not less than $4 \cdot 2^{\mu_{DL}}$.

As one embodiment, $n_{CSI\_ref}$ is a minimum value that is not less than $5 \cdot 2^{\mu_{DL}}$.

As one embodiment, $n$ is the sum of a first component and a second component.

As one embodiment, the first component is an integer.

As one embodiment, the first component is $\left\lfloor n' \cdot \frac{2^{\mu_{DL}}}{2^{\mu_{UL}}} \right\rfloor$, where $\mu_{DL}$ and $\mu_{UL}$ are downlink and uplink subcarrier spacing configurations respectively, and $\lfloor x \rfloor$ indicates that $x$ is rounded down.

As one embodiment, the second component is an integer.

As one embodiment, the second component is $\left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$, where $N_{slot,\,offset}^{CA}$ and $\mu_{offset}$ are configured by a higher-layer parameter ca-SlotOffset. A detailed description refers to Section 4.5 of 3GPP TS 38.211.

As one embodiment, the $n$ is $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$.

As one embodiment, the first downlink slot is a downlink slot $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}}$.

As one embodiment, "both the first power control offset and the second power control offset are indicated to the first CSI-RS resource" comprises: configuration information of the first CSI-RS resource comprises the first power control offset and the second power control offset.

As one embodiment, "both the first power control offset and the second power control offset are indicated to the first CSI-RS resource" comprises: configuration information of the first CSI-RS resource comprises at least one of the first power control offset or the second power control offset.

As one embodiment, "both the first power control offset and the second power control offset are indicated to the first CSI-RS resource" comprises: configuration information of the first CSI-RS resource comprises only one of the first power control offset and the second power control offset.

As one embodiment, the first power control offset and the second power control offset are indicated by different signaling respectively.

As one embodiment, the first power control offset and the second power control offset are indicated by an RRC parameter and a MAC CE respectively.

As one embodiment, the first power control offset and the second power control offset are indicated by an RRC parameter and physical layer signaling respectively.

As one embodiment, the first power control offset and the second power control offset are indicated by an RRC parameter and DCI signaling respectively.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an EPRE in any transmission opportunity of the first CSI-RS resource.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an EPRE in any transmission opportunity of the first CSI-RS resource in the first opportunity set.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an EPRE in one transmission opportunity of the first CSI-RS resource.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an EPRE in one transmission opportunity of the first CSI-RS resource in the first opportunity set.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an EPRE in the latest one transmission opportunity of the first CSI-RS resource.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an EPRE in the latest one transmission opportunity of the first CSI-RS resource in the first opportunity set.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to a maximum EPRE in all transmission opportunities of the first CSI-RS resource in the first opportunity set.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to a minimum EPRE in all transmission opportunities of the first CSI-RS resource in the first opportunity set.

As one embodiment, "a ratio of a PDSCH EPRE used in the calculation of the first CSI reporting to an EPRE of the first CSI-RS resource" refers to: a ratio of the PDSCH EPRE used in the calculation of the first CSI reporting to an average EPRE in all transmission opportunities of the first CSI-RS resource in the first opportunity set.

As one embodiment, the first CSI-RS resource comprises only one transmission opportunity.

As one embodiment, the first opportunity set comprises only one transmission opportunity of the first CSI-RS resource.

As one embodiment, the first opportunity set comprises at least two transmission opportunities of the first CSI-RS resource, and EPREs in the two transmission opportunities of the first CSI-RS resource in the first opportunity set are different.

As one embodiment, the first opportunity set comprises at least two transmission opportunities of the first CSI-RS resource, and EPREs in the two transmission opportunities of the first CSI-RS resource in the first opportunity set are the same.

As one embodiment, the first CSI-RS resource comprises at least two transmission opportunities, and EPREs in the two transmission opportunities of the first CSI-RS resource are different.

As one embodiment, the first CSI-RS resource comprises at least two transmission opportunities, and EPREs in any two transmission opportunities of the first CSI-RS resource are the same.

As one embodiment, which of the first power control offset and the second power control offset the target power control offset is equal to is indicated by information or signaling other than the first CSI reporting configuration.

As one embodiment, the first power control offset is a non-negative real number.

As one embodiment, the first power control offset is a positive real number.

As one embodiment, a decibel (dB) value of the first power control offset is an integer not less than -8 and not greater than 15.

Typically, the first power control offset is $a$, and the dB value of the first power control offset is $10log_{10}(a)$.

Typically, the unit of the dB value of the first power control offset is dB.

As one embodiment, the first power control offset belongs to configuration information of the first CSI-RS resource.

As one embodiment, the first CSI reporting indicates the first CSI-RS resource, and the first power control offset belongs to configuration information of the first CSI-RS resource.

As one embodiment, the first CSI reporting at least comprises a CRI, the CRI comprised in the first CSI reporting is used for indicating a first CSI-RS resource, and the first CSI-RS resource is one RS resource in the first RS resource set.

As one embodiment, the first power control offset is a ratio of a physical downlink shared channel (PDSCH) energy per resource element (EPRE) configured to the first CSI-RS resource to an NZP CSI-RS EPRE.

As one embodiment, the first power control offset is a ratio of a PDSCH EPRE to an NZP CSI-RS EPRE when UE derives CSI feedback.

As one sub-embodiment of the above embodiment, "the first power control offset is a ratio of a PDSCH EPRE to an NZP CSI-RS EPRE when UE derives CSI feedback" means: the first power control offset is an assumed ratio of the PDSCH EPRE to the NZP CSI-RS EPRE when the UE derives the CSI feedback.

As one embodiment, configuration information of any CSI-RS resource in the first RS resource set comprises one power offset indicating a ratio of a PDSCH EPRE to an NZP CSI-RS EPRE.

As one embodiment, one power offset indicating a ratio of a PDSCH EPRE to an NZP CSI-RS EPRE is a ratio of a PDSCH EPRE to an NZP CSI-RS EPRE when UE derives CSI feedback.

As one sub-embodiment of the above embodiment, "one power offset indicating a ratio of a PDSCH EPRE to an NZP CSI-RS EPRE is a ratio of a PDSCH EPRE to an NZP CSI-RS EPRE when UE derives CSI feedback" means: one power offset indicating a ratio of a PDSCH EPRE to an NZP CSI-RS EPRE is an assumed ratio of a PDSCH EPRE to an NZP CSI-RS EPRE when UE derives CSI feedback.

Typically, a ratio of A to B is equal to A/B.

As one embodiment, one power offset indicating a ratio of a PDSCH EPRE to an NZP CSI-RS EPRE is powerControlOffset.

As one embodiment, configuration information of one CSI-RS resource comprises at least one of an index or identifier of the CSI-RS resource, a period and offset, resource mapping, the number of ports, a frequency domain density, a code division multiplexing (CDM) type, a power control offset, a ratio of an NZP CSI-RS EPRE to SS/PBCH block EPRE, a scrambling index or identifier, a BWP index or identifier, repetition, quasi-coLation (QCL) information, or tracking reference signal (TRS) information.

As one sub-embodiment of the above embodiment, the power offset in configuration information of one CSI-RS resource is a ratio of a PDSCH EPRE to an NZP CSI-RS EPRE when UE derives CSI feedback.

As one sub-embodiment of the above embodiment, "a ratio of a PDSCH EPRE to an NZP CSI-RS EPRE when UE derives CSI feedback" means: an assumed ratio of the PDSCH EPRE to the NZP CSI-RS EPRE when the UE derives the CSI feedback.

As one sub-embodiment of the above embodiment, "a ratio of an NZP CSI-RS EPRE to an SS/PBCH block EPRE" means: an assumed ratio of the NZP CSI-RS EPRE to the SS/PBCH block EPRE.

As one embodiment, configuration information of one SS/PBCH block resource comprises an index or identifier of the SS/PBCH block resource.

As one embodiment, configuration information of one SS/PBCH block resource comprises at least one of an index or identifier of the SS/PBCH block resource, a period, a time offset, or a frequency domain offset.

Typically, an index or identifier of one RS resource is used for identifying the one RS resource.

As one embodiment, channel information measured in one transmission opportunity is used for calculating first CSI reporting. The channel information measured in the one transmission opportunity is used for calculating the first CSI reporting after a power adjustment using a first coefficient, and the first coefficient is related to the first CSI-RS EPRE.

Subject to the limitations of the above method or embodiment, how the ratio of the PDSCH EPRE to the first CSI-RS EPRE is used for calculating the first CSI reporting is determined by the manufacturer of the first node or is implementation-related. A typical but non-limiting implementation is described below:

the first CSI reporting at least comprises a CRI, the CRI comprised in the first CSI reporting is used for indicating a first CSI-RS resource, and the first CSI-RS resource is one RS resource in the first RS resource set; the first node performs measurement for the first CSI-RS resource to obtain a channel parameter matrix $H_{r \times t}$, where r, t are respectively the number of receiving antennas and the number of antenna ports of the first CSI-RS resource; and a power adjustment is performed on the channel parameter matrix $H_{r \times t}$, an adjusted channel parameter matrix is $\sqrt{P} \cdot H_{r \times t}$ , where $P$ is an assumed ratio (i.e., the first power control offset) of a PDSCH EPRE to a first CSI-RS EPRE.

Under the limitations of the above method or embodiments, a specific algorithm used for calculating the first CSI reporting is determined by the manufacturer of the first node, or is implementation-related. A typical but non-limiting implementation is described below:

the first CSI reporting comprises a CRI and a CQI, the CRI comprised in the first CSI reporting is used for indicating a first CSI-RS resource, and the first CSI-RS resource is one RS resource in the first RS resource set; the first node first performs measurement for the first CSI-RS resource to obtain a channel parameter matrix $H_{r \times t}$, where $r$, $t$ are respectively the number of receiving antennas and the number of antenna ports of the first CSI-RS resource; a power adjustment is performed on the channel parameter matrix $H_{r \times t}$, an adjusted channel parameter matrix is $\sqrt{P} \cdot H_{r \times t}$ , where P is an assumed ratio (i.e., the first power control offset) of a PDSCH EPRE to a first CSI-RS EPRE; under a condition that a precoding matrix $W_{t \times l}$ is used, a precoded channel parameter matrix is $\sqrt{P} \cdot H_{r \times t} \cdot W_{t \times l}$ , where $l$ is the number of ranks or layers, in one case, $l$ is a positive integer not greater than $t$, and in another case, the precoding matrix is an identity matrix, in which case $t = l$; and an equivalent channel capacity of $H_{r \times t} \cdot W_{t \times l}$ is calculated using criteria such as a signal interference noise ratio (SINR), exponential effective SINR mapping (EESM), or a received block mean mutual information ratio (RBIR), and the CQI comprised in the first CSI reporting is then determined based on the equivalent channel capacity by a table lookup or other method. Generally speaking, direct mapping of the equivalent channel capacity to CQI values depends on hardware-related factors such as receiver performance or a modulation mode.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is called an EPS (Evolved Packet System) 200. The 5G NR or LTE network architecture 200 may be referred to as a 5GS (5G System)/EPS (Evolved Packet System) 200 or some other suitable terms. The 5GS/EPS 200 may comprise one or more UE (User Equipment) 201, a piece of UE241 that performs sidelink communication with the UE201, an NG-RAN (Next Generation Radio Access Network) 202, 5GC (5G CoreNetwork)/EPC (Evolved Packet Core) 210, HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides packet switching services, however those skilled in the art will readily understand that various concepts presented throughout the present application can be extended to networks providing circuit switching services. The NG-RAN 202 comprises NR (New Radio) Node B (gNB) 203 and other gNB204. The gNB203 provides user and control plane protocol terminations toward the UE201. The gNB203 may be connected to other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (transmit receive point), or some other suitable terms. The gNB203 provides an access point to the 5GC/EPC210 for the UE201. Examples of the UE201 comprise cellular telephones, smart phones, session initiation protocol (SIP) telephones, laptops, personal digital assistants (PDAs), satellite radios, global positioning systems, multimedia devices, video devices, digital audio players (e.g., MP3 players), cameras, game consoles, drones, aircrafts, narrowband physical network devices, machine type communication devices, land vehicles, cars, wearable devices, or any other similar functional devices. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable term. The gNB203 is connected to the 5GC/EPC210 via an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Data Network Gateway)/UPF213. The MME/AMF/SMF211 is a control node that processes signaling between the UE201 and the 5GC/EPC210. Generally speaking, MME/AMF/SMF211 provides carrying and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise operator's corresponding Internet protocol services, which may specifically comprise Internet, intranets, IMS (IP Multimedia Subsystem) and packet switching services.

As one embodiment, the first node in the present application comprises the UE201.

As one embodiment, the first node in the present application comprises the UE241.

As one embodiment, the second node in the present application comprises the gNB203.

As one embodiment, the UE201 supports Energy Saving on the base station side.

As one embodiment, the gNB203 supports Energy Saving on the base station side.

<u>**Embodiment 3**</u>

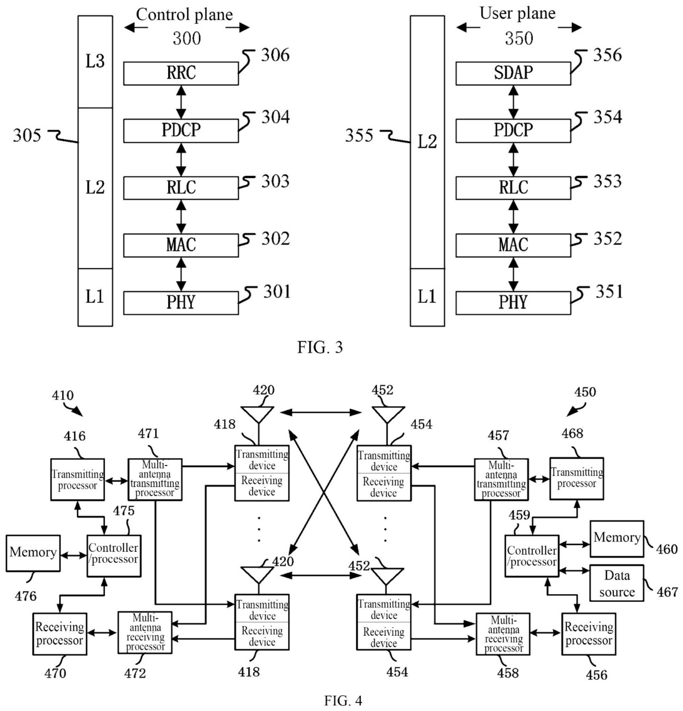

Embodiment 3 illustrates a schematic diagram of an embodiment of a wireless protocol architecture of a user plane and a control plane according to one embodiment of the present application, as shown in FIG. 3.

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 between a first communication node device (UE, gNB or RSU in V2X) and a second communication node device (gNB, UE or RSU in V2X) or between two pieces of UE: layer 1, layer 2 and layer 3. The Layer 1 (L1 layer) is the lowest layer and implements various PHY (physical layer) signal processing functions. The L1 layer will be referred to herein as PHY301. Layer 2 (L2 layer) 305 is above PHY301 and is responsible for a link between the first communication node device and the second communication node device, or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and provides cross-zone mobility support for the first communication node device between the second communication node devices. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transmission channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in layer 3 (L3 layer) in the control plane 300 is responsible for obtaining radio resources (i.e., radio bearers) and configuring a lower layer using RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server).

As one embodiment, the radio protocol architecture in FIG. 3 is applicable to a first node in the present application.

As one embodiment, the radio protocol architecture in FIG. 3 is applicable to a second node in the present application.

As one embodiment, the first CSI reporting configuration is generated in the RRC sublayer 306.

As one embodiment, the first CSI reporting is generated in the PHY301.

As one embodiment, the first CSI reporting is generated in the PHY351.

As one embodiment, the first information block is generated in the RRC sublayer 306.

As one embodiment, the first information block is generated in the MAC sublayer 302.

As one embodiment, the first information block is generated in the MAC sublayer 352.

As one embodiment, the first information block is generated at the PHY301.

As one embodiment, the first information block is generated at the PHY351.

As one embodiment, the second information block is generated in the RRC sublayer 306.

As one embodiment, the second information block is generated in the MAC sublayer 302.

As one embodiment, the second information block is generated in the MAC sublayer 352.

As one embodiment, the second information block is generated at the PHY301.

As one embodiment, the second information block is generated at the PHY351.

As one embodiment, the first signaling is generated in the RRC sublayer 306.

As one embodiment, the first signaling is generated in the MAC sublayer 302.

As one embodiment, the first signaling is generated in the MAC sublayer 352.

As one embodiment, the first signaling is generated in the PHY301.

As one embodiment, the first signaling is generated in the PHY351.

As one embodiment, the third information block is generated in the RRC sublayer 306.

As one embodiment, the third information block is generated in the MAC sublayer 302.

As one embodiment, the third information block is generated in the MAC sublayer 352.

As one embodiment, the third information block is generated at the PHY301.

As one embodiment, the third information block is generated at the PHY351.

As one embodiment, the fourth information block is generated in the RRC sublayer 306.

As one embodiment, the third information block is generated in the MAC sublayer 302.

As one embodiment, the third information block is generated in the MAC sublayer 352.

As one embodiment, the third information block is generated at the PHY301.

As one embodiment, the third information block is generated at the PHY351.

As one embodiment, the higher layer in the present application refers to a layer above the physical layer.

As one embodiment, the higher layer in the present application refers to an RRC layer.

As one embodiment, the higher layer in the present application refers to a MAC layer.

As one embodiment, the higher layer in the present application comprises at least one of an RRC layer or a MAC layer.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper-layer data packets from a core network are provided to the controller/processor 475. The controller/processor 475 implements the functionality of an L2 layer. In DL, the controller/processor 475 provides header compression, encryption, packet segmentation and reordering, multiplexing between logic and transmission channels, and radio resource allocation for the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for an L1 layer (i.e., a physical layer). The transmitting processor 416 implements encoding and interleaving to facilitate forward error correction (FEC) at the second communication device 450, and constellation mapping based on various modulation schemes (e.g., binary phase shift keying (BPSK), quadrature phase shift keying (QPSK), M phase shift keying (M-PSK), M quadrature amplitude modulation (M-QAM)). The multi-antenna transmitting processor 471 performs digital spatial precoding on encoded and modulated symbols, comprising codebook-based precoding and non-codebook-based precoding, and beamforming processing to generate one or more parallel streams. The transmitting processor 416 then maps each parallel stream to a subcarrier, multiplexes the modulated symbols with a reference signal (e.g., pilot) in a time domain and/or a frequency domain, and then uses a Fast Fourier Inverse Transform (IFFT) to generate a physical channel for carrying a time domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In transmission from the first communication device 410 to the second communication device 450, at the second communication device 450, each receiving device 454 receives a signal through its corresponding antenna 452. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In a frequency domain, a physical layer data signal and a reference signal are demultiplexed by the receiving processor 456, wherein the reference signal will be used for channel estimation, and the data signal recovers any parallel stream destined for the second communication device 450 after being detected by multiple antennas in the multi-antenna receiving processor 458. Symbols on each parallel stream are demodulated and recovered in the receiving processor 456 and generate a soft decision. Later, the receiving processor 456 decodes and de-interleaves the soft decision to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In a downLink (DL), the controller/processor 459 provides demultiplexing between transmission and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing. The controller/processor 459 is also responsible for error detection using acknowledge (ACK) and/or negative acknowledge (NACK) protocols to support HARQ operation.

In transmission from the second communication device 450 to the first communication device 410, at the second communication device 450, the data source 467 is used for providing upper-layer data packets to the controller/processor 459. The data source 467 represents all protocol layers above the L2 layer. Similar to the sending function at the first communication device 410 described in the DL, the controller/processor 459 implements header compression, encryption, packet segmentation and reordering, and multiplexing between logic and transmission channels based on wireless resource allocation of the first communication device 410, to implement L2 layer functions for a user plane and a control plane. The controller/processor 459 is also responsible for HARQ operations, retransmission of lost packets, and signaling to the first communication device 410. The transmitting processor 468 performs modulation mapping and channel encoding processing, the multi-antenna transmitting processor 457 performs digital multi-antenna spatial precoding, comprising codebook-based precoding and non-codebook-based precoding, and beamforming processing, and later the transmitting processor 468 modulates a generated parallel stream into a multi-carrier/single-carrier symbol stream, and then provides it to different antennas 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In transmission from the second communication device 450 to the first communication device 410, the function at the first communication device 410 is similar to a reception function at the second communication device 450 described in transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transmission and logical channels, packet reassembly, decryption, header decompression, and control signal processing to recover upper-layer data packets from the second communication device 450. The upper-layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, and the at least one memory comprises computer program codes; The at least one memory and the computer program codes are configured to be used together with the at least one processor. The second communication device 450 at least: receives a first CSI reporting configuration, the first CSI reporting configuration indicating a first RS resource set, and the first RS resource set comprising one or more RS resources; and sends first CSI reporting, wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, the second communication device 450 comprises: a memory storing a computer-readable instruction program, the computer-readable instruction program generates an action when executed by at least one processor, and the action comprises: receiving a first CSI reporting configuration, the first CSI reporting configuration indicating a first RS resource set, and the first RS resource set comprising one or more RS resources; and sending first CSI reporting, wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, the first communication device 410 comprises: at least one processor and at least one memory, and the at least one memory comprises computer program codes; The at least one memory and the computer program codes are configured to be used together with the at least one processor. The first communication device 410 at least: sends a first CSI reporting configuration, the first CSI reporting configuration indicating a first RS resource set, and the first RS resource set comprising one or more RS resources; and receiving first CSI reporting, wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, the first communication device 410 comprises: a memory storing a computer-readable instruction program, the computer-readable instruction program generates an action when executed by at least one processor, and the action comprises: sending a first CSI reporting configuration, the first CSI reporting configuration indicating a first RS resource set, and the first RS resource set comprising one or more RS resources; and receiving first CSI reporting, wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, or the data source 467} is used for receiving the first CSI reporting configuration in the present application; and at least one of {the antenna 420, the transmitting device 418, the transmitting processor 416, the multi-antenna transmitting processor 471, the controller/processor 475, or the memory 476} is used for sending the first CSI reporting configuration in the present application.

As one embodiment, at least one of {the antenna 452, the transmitting device 454, the transmitting processor 468, the multi-antenna transmitting processor 457, the controller/processor 459, or the memory 460} is used for sending the first CSI reporting in the present application. At least one of {the antenna 420, the receiving device 418, the receiving processor 470, the multi-antenna receiving processor 472, the controller/processor 475, or the memory 476} is used for receiving the first CSI reporting in the present application.

As one embodiment, at least one of {the antenna 452, the receiving device 454, the receiving processor 456, the multi-antenna receiving processor 458, the controller/processor 459, the memory 460, or the data source 467} is used for receiving the first information block in the present application; and at least one of {the antenna 420, the transmitting device 418, the transmitting processor 416, the multi-antenna transmitting processor 471, the controller/processor 475, or the memory 476} is used for sending the first information block in the present application.

As one embodiment, at least one of {the antenna 452, the receiving device 454, the receiving processor 456, the multi-antenna receiving processor 458, the controller/processor 459, the memory 460, or the data source 467} is used for receiving the second information block in the present application; and at least one of {the antenna 420, the transmitting device 418, the transmitting processor 416, the multi-antenna transmitting processor 471, the controller/processor 475, or the memory 476} is used for sending the second information block in the present application.

As one embodiment, at least one of {the antenna 452, the receiving device 454, the receiving processor 456, the multi-antenna receiving processor 458, the controller/processor 459, the memory 460, the data source 467} is used for receiving the first signaling in the present application; at least one of {the antenna 420, the transmitting device 418, the transmitting processor 416, the multi-antenna transmitting processor 471, the controller/processor 475, the memory 476} is used for sending the first signaling in the present application.

As one embodiment, at least one of {the antenna 452, the receiving device 454, the receiving processor 456, the multi-antenna receiving processor 458, the controller/processor 459, the memory 460, or the data source 467} is used for receiving the third information block in the present application; and at least one of {the antenna 420, the transmitting device 418, the transmitting processor 416, the multi-antenna transmitting processor 471, the controller/processor 475, or the memory 476} is used for sending the third information block in the present application.

As one embodiment, at least one of {the antenna 452, the receiving device 454, the receiving processor 456, the multi-antenna receiving processor 458, the controller/processor 459, the memory 460, or the data source 467} is used for receiving the fourth information block in the present application; and at least one of {the antenna 420, the transmitting device 418, the transmitting processor 416, the multi-antenna transmitting processor 471, the controller/processor 475, or the memory 476} is used for sending the fourth information block in the present application.

**Embodiment 5**

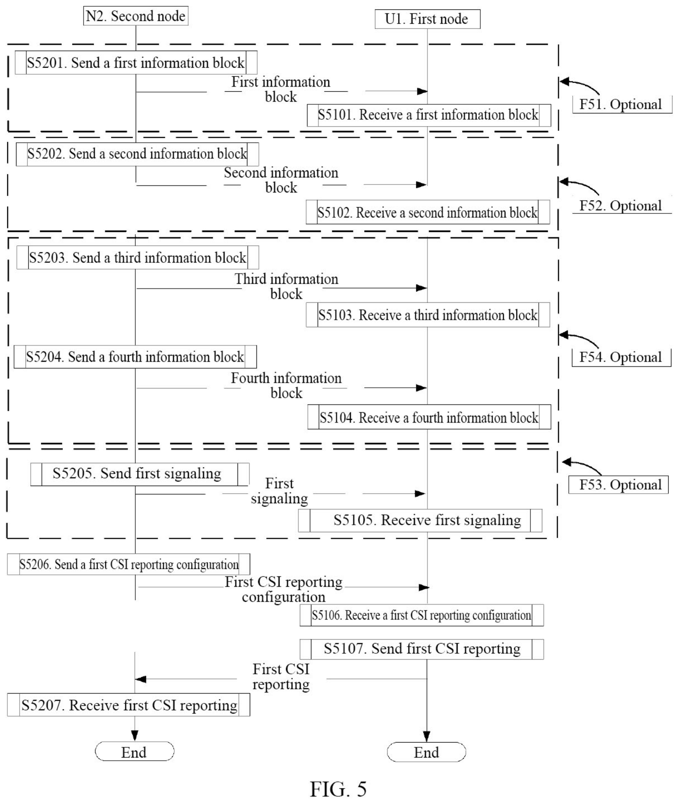

Embodiment 5 illustrates a flowchart of wireless transmission according to one embodiment of the present application, as shown in FIG. 5. In FIG. 5, a first node U1 and a second node N2 are two communication nodes performing transmission through an air interface, respectively, wherein steps in blocks F51 to F54 are optional.

For **the first node U1**, in step S5101, a first information block is received; in step S5102, a second information block is received; in step S5103, a third information block is received; in step S5104, a fourth information block is received; in step S5105, first signaling is received; in step S5106, a first CSI reporting configuration is received; and in step S5107, first CSI reporting is sent.

For **the second node N2**, in step S5201, a first information block is sent; in step S5202, a second information block is sent; in step S5203, a third information block is sent; in step S5204, a fourth information block is sent; in step S5205, first signaling is sent; in step S5206, a first CSI reporting configuration is sent; and in step S5207, first CSI reporting is received.

In Embodiment 5, the first CSI reporting configuration indicates a first RS resource set, and the first RS resource set comprises one or more RS resources; and a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, the first information block and the second information block belong to the same RRC IE.

As one embodiment, the first information block and the second information block respectively belong to two RRC IEs.

As one embodiment, the first information block and the second information block are received simultaneously.

As one embodiment, the first information block and the second information block are received together.

As one embodiment, reception of the first information block is earlier than that of the second information block.

As one embodiment, reception of the first information block is not earlier than that of the second information block.

As one embodiment, the first information block, the second information block, the third information block, and the fourth information block are all carried by the same RRC signaling.

As one embodiment, the first information block, the second information block, the third information block, and the fourth information block are carried by at least two pieces of signaling.

As one embodiment, the first information block, the second information block, the third information block, and the fourth information block are received simultaneously.

As one embodiment, the first information block, the second information block, the third information block, and the fourth information block are received together.

As one embodiment, the first information block, the second information block, and the third information block are carried by the same RRC signaling.

As one embodiment, the first information block and the third information block belong to different RRC IEs.

As one embodiment, the second information block and the third information block belong to different RRC IEs.

As one embodiment, the first information block, the second information block, and the third information block are received simultaneously.

**EP 4 704 478 A1**

As one embodiment, the first information block, the second information block, and the third information block are received together.

As one embodiment, reception of the first information block and reception of the second information block are earlier than that of the third information block.

As one embodiment, reception of the first information block and reception of the second information block are not earlier than that of the third information block.

As one embodiment, the first information block, the second information block, and the fourth information block are carried by the same RRC signaling.

As one embodiment, the first information block and the fourth information block belong to different RRC IEs.

As one embodiment, the second information block and the fourth information block belong to different RRC IEs.

As one embodiment, the first information block and the fourth information block are carried by different signaling.

As one embodiment, the first information block, the second information block, and the fourth information block are received simultaneously.

As one embodiment, the first information block, the second information block, and the fourth information block are received together.

As one embodiment, reception of the first information block and reception of the second information block are earlier than that of the fourth information block.

As one embodiment, reception of the first information block and reception of the second information block are not earlier than that of the fourth information block.

As one embodiment, the third information block and the fourth information block are received simultaneously.

As one embodiment, the third information block and the fourth information block are received together.

As one embodiment, reception of the third information block is earlier than that of the fourth information block.

As one embodiment, reception of the third information block is not earlier than that of the fourth information block.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first information block is transmitted in a physical downlink shared channel (PDSCH).

As one embodiment, the first information block is transmitted in a physical downlink control channel (PDCCH).

As one embodiment, the second information block is transmitted in a PDCCH.

As one embodiment, the second information block is transmitted in a PDSCH.

As one embodiment, the first signaling is transmitted in a PDCCH.

As one embodiment, the first signaling is transmitted in a PDSCH.

As one embodiment, the third information block is transmitted in a PDCCH.

As one embodiment, the third information block is transmitted in a PDSCH.

As one embodiment, the fourth information block is transmitted in a PDCCH.

As one embodiment, the fourth information block is transmitted in a PDSCH.

As one embodiment, the first CSI reporting is transmitted in a PUCCH.

As one embodiment, the first CSI reporting is transmitted in a PUSCH.

As one embodiment, steps in block F51 of FIG. 5 exist, and the above method for the first node U1 used for wireless communication comprises: receiving a first information block, wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

As one embodiment, steps in block F51 of FIG. 5 exist, and the method for the second node N2 used for wireless communication comprises: sending a first information block, wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

As one embodiment, steps in block F52 of FIG. 5 exist, and the above method for the first node U1 used for wireless communication comprises: receiving a second information block, wherein the second information block is used for determining a reference frequency domain resource set; and UL transmission in one or more DL symbols of the

18

reference time domain resource set belongs to the reference frequency domain resource set in frequency domain.

As one embodiment, steps in block F52 of FIG. 5 exist, and the above method for the second node N2 used for wireless communication comprises: sending a second information block, wherein the second information block is used for determining a reference frequency domain resource set; and UL transmission in one or more DL symbols of the reference time domain resource set belongs to the reference frequency domain resource set in frequency domain.

As one embodiment, steps in block F53 of FIG. 5 exist, and the above method for the first node U1 used for wireless communication comprises: receiving first signaling, wherein the first signaling indicates which of the first power control offset and the second power control offset the target power control offset is equal to.

As one embodiment, steps in block F53 of FIG. 5 exist, and the above method for the second node N2 used for wireless communication comprises: sending first signaling, wherein the first signaling indicates which of the first power control offset and the second power control offset the target power control offset is equal to.

As one embodiment, steps in block F54 of FIG. 5 exist, and the above method for the first node U1 used for wireless communication comprises: receiving a third information block and a fourth information block, wherein the third information block indicates the first power control offset, and the fourth information block indicates the second power offset; and at least the third information block of the third information block and the fourth information block belongs to configuration information of the first CSI-RS resource.

As one embodiment, steps in block F54 of FIG. 5 exist, and the above method for the second node N2 used for wireless communication comprises: sending a third information block and a fourth information block, wherein the third information block indicates the first power control offset, and the fourth information block indicates the second power offset; and at least the third information block of the third information block and the fourth information block belongs to configuration information of the first CSI-RS resource.

As one embodiment, reception of the third information block is later than that of the fourth information block.

As one embodiment, reception of the third information block is earlier than that of the fourth information block.

## Embodiment 6

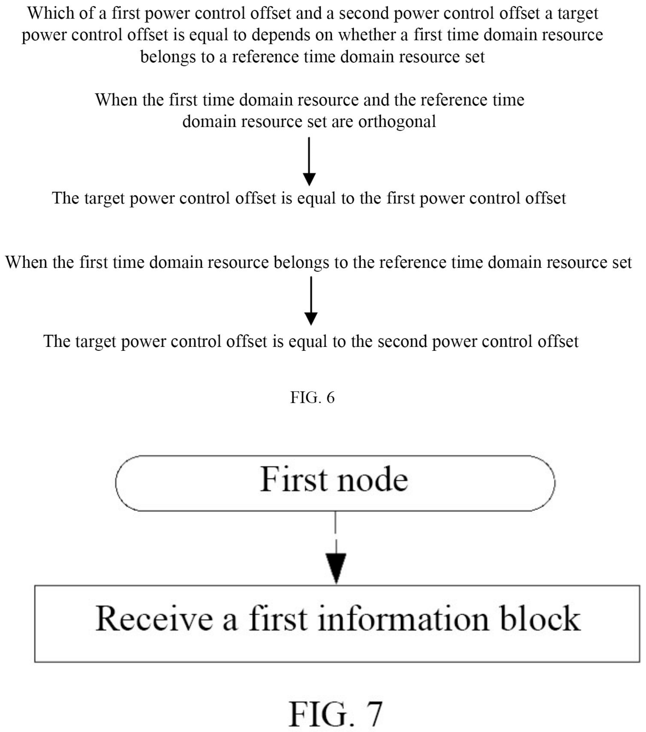

Embodiment 6 illustrates a schematic diagram of a relationship between a first time domain resource, a reference time domain resource set, and a target power control offset according to one embodiment of the present application; as shown in FIG. 6.

In Embodiment 6, which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

As one embodiment, when the first time domain resource and the reference time domain resource set partially overlap, the target power control offset is equal to the first power control offset.

As one embodiment, when the first time domain resource and the reference time domain resource set partially overlap, the target power control offset is equal to the second power control offset.

As one embodiment, the first time domain resource and the reference time domain resource set are orthogonal, or the first time domain resource belongs to the reference time domain resource set.

As one embodiment, the first time domain resource comprises a time domain resource occupied by a CSI reference resource of the first CSI reporting.

As one embodiment, the first time domain resource comprises a time domain resource occupied by the first CSI reporting.

As one embodiment, the first time domain resource comprises a time domain resource occupied by a latest transmission opportunity of the first CSI-RS resource in the first opportunity set.

As one embodiment, the first time domain resource comprises a time domain resource occupied by trigger signaling of the first CSI reporting.

As one embodiment, second signaling triggers the first CSI reporting, and the first time domain resource comprises a time domain resource occupied by the second signaling.

As one embodiment, the first time domain resource comprises a time domain resource occupied by the first CSI-RS resource.

As one sub-embodiment of the above embodiment, the second signaling is one piece of DCI, and a CSI request field of the one piece of DCI triggers the first CSI reporting.

As one embodiment, the first time domain resource comprises a time domain resource occupied by an activation command of the first CSI reporting.

As one embodiment, third signaling activates the first CSI reporting, and the first time domain resource comprises a time domain resource occupied by the third signaling.

As one sub-embodiment of the above embodiment, the third signaling is one MAC CE, and the one MAC CE is used for activating the first CSI reporting.

As one embodiment, a name of the MAC CE activating the first CSI reporting comprises SP CSI reporting on PUCCH Activation MAC CE.

As one embodiment, a time domain resource occupied by the first CSI reporting belongs to the reference time domain resource set, and a frequency domain resource occupied by the first CSI reporting belongs to a reference frequency domain resource set.

**Embodiment 7**

Embodiment 7 illustrates a schematic diagram of a first information block and a reference time domain resource set according to one embodiment of the present application; as shown in FIG. 7.

In Embodiment 7, the first receiver receives a first information block, wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

As one embodiment, the first information block is carried by a higher layer signaling.

As one embodiment, the first information block is carried by RRC (Radio Resource Control) signaling.

As one embodiment, the first information block comprises all or part of fields in one RRC information element (IE).

As one embodiment, the first information block comprises all or part of fields in each RRC IE of a plurality of RRC IEs.

As one embodiment, the first information block comprises all or part of fields in a TDD-UL-DL-ConfigCommon IE.

As one embodiment, the first information block comprises all or part of fields in a TDD-UL-DL-ConfigDedicated IE.

As one embodiment, the first information block comprises all or part of fields in a ServingCellConfig IE.

As one embodiment, the first information block comprises all or part of fields in a ServingCellConfigCommonSIB IE.

As one embodiment, the first information block comprises information in all or part of fields in a ServingCell-ConfigCommon IE.

As one embodiment, the first information block is carried by at least one RRC IE.

As one embodiment, a name of one IE carrying the first information block comprises TDD-UL-DL-Config.

As one embodiment, a name of one IE carrying the first information block comprises ServingCellConfig.

As one embodiment, the first information block is carried by a MAC CE (Medium Access Control layer Control Element).

As one embodiment, the first information block comprises a MAC CE.

As one embodiment, the first information block is transmitted on a downlink physical layer data channel (i.e., a downlink channel that can be used for carrying physical layer data).

As one embodiment, the first information block is transmitted on a PDSCH.

As one embodiment, the first information block is carried by DCI (Downlink control information).

As one embodiment, the first information block comprises DCI.

As one embodiment, the first information block comprises one or more fields in one piece of DCI.

As one embodiment, the first information block is carried by DCI format 2_0.

As one embodiment, the first information block comprises DCI format 2_0.

As one embodiment, the first information block is jointly carried by RRC signaling and a MAC CE.

As one embodiment, the first information block is jointly carried by higher-layer signaling and DCI.

As one embodiment, the first information block is used for indicating the reference time domain resource set.

As one embodiment, the first information block explicitly indicates the reference time domain resource set.

As one embodiment, the first information block implicitly indicates the reference time domain resource set.

As one embodiment, the first information block indicates a period and time offset of the reference time domain resource set.

As one embodiment, the first information block indicates a time domain resource comprised in the reference time domain resource set within one period.

As one embodiment, the first information block indicates symbols comprised in the reference time domain resource set within one period.

As one embodiment, the first information block indicates slots comprised in the reference time domain resource set within one period.

As one embodiment, a sender of the first signaling supports simultaneously receiving and sending wireless signals in the reference time domain resource set.

As one embodiment, a sender of the first signaling simultaneously receives and sends wireless signals in the reference time domain resource set.

As one embodiment, the reference time domain resource set comprises a positive integer number of symbols.

As one embodiment, the reference time domain resource set comprises one or more symbols.

As one embodiment, the reference time domain resource set comprises one symbol.

As one embodiment, the reference time domain resource set comprises a plurality of symbols.

As one embodiment, the reference time domain resource set comprises at least one slot.

As one embodiment, the reference time domain resource set comprises at least one subframe.

As one embodiment, the symbol is a single-carrier symbol.

As one embodiment, the symbol is a multi-carrier symbol.

As one embodiment, the multi-carrier symbol is an orthogonal frequency division multiplexing (OFDM) symbol.

As one embodiment, the symbol is obtained by the output of the transform precoding undergoing the OFDM symbol generation.

As one embodiment, the multi-carrier symbol is a single carrier-frequency division multiple access (SC-FDMA) symbol.

As one embodiment, the multi-carrier symbol is a Discrete Fourier Transform Spread OFDM (DFT-S-OFDM) symbol.

As one embodiment, the multi-carrier symbol is a filter bank multi carrier (FBMC) symbol.

As one embodiment, the multi-carrier symbol comprises a cyclic prefix (CP).

As one embodiment, the reference time domain resource set comprises symbols that are simultaneously used for uplink transmission and downlink transmission.

As one embodiment, any symbol in the reference time domain resource set can be simultaneously used for uplink transmission and downlink transmission.

As one embodiment, any symbol in the reference time domain resource set is simultaneously used for uplink transmission and downlink transmission.

As one embodiment, at least one symbol in the reference time domain resource set is simultaneously used for uplink transmission and downlink transmission.

As one embodiment, the reference time domain resource set does not comprise a symbol used for transmission of a first type of downlink signal, the first type of downlink signal comprises one or more of a synchronisation signal (SS)/physical broadcast channel (PBCH) block, a control resource set (CORESET) with an index 0, or a system information block (SIB).

As one embodiment, one or more RBs in one or more DL symbols of the reference time domain resource set are used for uplink transmission.

As one embodiment, each symbol in the reference time domain resource set is configured as a DL by a higher-layer parameter.

As one embodiment, each symbol in the reference time domain resource set is configured as a DL or Flexible by a higher-layer parameter.

As one embodiment, at least one symbol in the reference time domain resource set is configured as a DL by a higher-layer parameter, and at least one symbol in the reference time domain resource set is configured as Flexible by a higher-layer parameter.

As one embodiment, the reference time domain resource set is configured to one service cell.

As one embodiment, the reference time domain resource set is configured to a service cell where the first RS resource set is located.

As one embodiment, the reference time domain resource set is configured to at least one bandwidth part (BWP).

As one embodiment, the reference time domain resource set is configured to one BWP.

As one embodiment, the reference time domain resource set is configured to one DL BWP.

As one embodiment, the reference time domain resource set is configured to a DL bandwidth part (BWP) where the first RS resource set is located.

As one embodiment, the higher-layer parameter is carried by radio resource control (RRC) signaling.

As one embodiment, the higher-layer parameter comprises all or part of fields in one RRC information element (IE).

As one embodiment, the higher-layer parameter comprises all or part of fields in each RRC IE of a plurality of RRC IEs.

As one embodiment, the higher-layer parameter comprises all or part of fields in a TDD-UL-DL-ConfigCommon IE.

As one embodiment, the higher-layer parameter comprises all or part of fields in a TDD-UL-DL-ConfigDedicated IE.

As one embodiment, the higher-layer parameter comprises all or part of fields in a ServingCellConfig IE.

As one embodiment, the higher-layer parameter comprises all or part of fields in a ServingCellConfigCommon-SIB IE.

As one embodiment, the higher-layer parameter comprises information in all or part of fields in a ServingCell-ConfigCommon IE.

As one embodiment, the higher-layer parameter is carried by at least one RRC IE.

As one embodiment, a name of one IE carrying the higher-layer parameter comprises TDD-UL-DL-Config.

As one embodiment, a name of one IE carrying the higher-layer parameter comprises ServingCellConfig.

## Embodiment 8

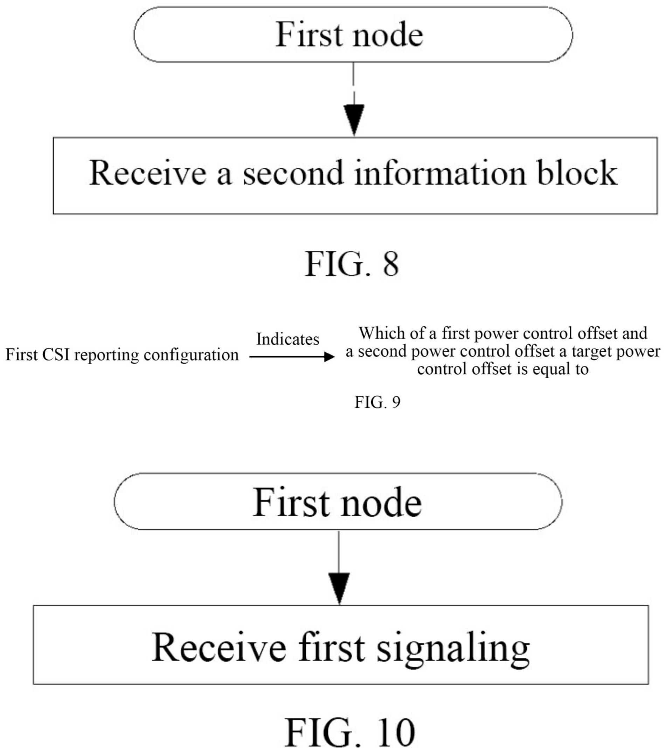

Embodiment 8 illustrates a schematic diagram of a second information block and a reference frequency domain resource set according to another embodiment of the present application; as shown in FIG. 8.

In Embodiment 8, the first receiver receives a second information block, wherein the second information block is used for determining a reference frequency domain resource set; and UL transmission in one or more DL symbols of the reference time domain resource set belongs to the reference frequency domain resource set in frequency domain.

As one embodiment, the second information block is carried by higher-layer signaling.

As one embodiment, the second information block is carried by RRC signaling.

As one embodiment, the second information block comprises part or all of fields in one or more RRC IEs.

As one embodiment, the second information block comprises part of fields in one or more RRC IEs.

As one embodiment, the second information block comprises part of fields in a plurality of RRC IEs.

As one embodiment, the second information block comprises all or part of fields in one RRC information element (IE).

As one embodiment, the second information block comprises part of fields in one RRC information element (IE).

As one embodiment, the second information block is carried by MAC CE signaling.

As one embodiment, the second information block is carried by physical layer signaling.

As one embodiment, the second information block is carried by DCI signaling.

As one embodiment, a frequency domain resource occupied by the first CSI-RS resource overlaps with the reference frequency domain resource set.

As one embodiment, the frequency domain resource occupied by the first CSI-RS resource comprises at least one subcarrier in the reference frequency domain resource set.

As one embodiment, a frequency domain resource occupied by the first CSI-RS resource belongs to the reference frequency domain resource set.

As one embodiment, the frequency domain resource occupied by the first CSI-RS resource comprises at least one subcarrier in the reference frequency domain resource set and at least one subcarrier outside the reference frequency domain resource set.

As one embodiment, when one transmission opportunity of the first CSI-RS resource belongs to the reference time domain resource set in time domain, reception of the one transmission opportunity of the first CSI-RS resource is given up.

As one embodiment, a frequency domain resource occupied by the first CSI-RS resource overlaps with the reference frequency domain resource set. When one transmission opportunity of the first CSI-RS resource belongs to the reference time domain resource set in time domain, a part of the one transmission opportunity of the first CSI-RS resource that does not belong to the reference frequency domain resource set is received.

As one embodiment, the first opportunity set and the reference time domain resource set are orthogonal.

As one embodiment, the first opportunity set overlaps with the reference time domain resource set.

As one embodiment, any transmission opportunity in the first opportunity set satisfies "it does not belong to the reference time domain resource set in time domain, or it belongs to the reference time domain resource set in time domain but is orthogonal to the reference frequency domain resource set in frequency domain."

As one embodiment, the first opportunity set comprises at least one transmission opportunity of at least one RS resource in the first RS resource set that is not later than the CSI reference resource of the first CSI reporting and that does not belong to the reference time domain resource set in time domain.

As one embodiment, the first opportunity set comprises at least one transmission opportunity of at least one RS resource in the first RS resource set that is no later than the CSI reference resource of the first CSI reporting and that satisfies "it does not belong to the reference time domain resource set in time domain, or belongs to the reference time domain resource set in time domain but is orthogonal to the reference frequency domain resource set in frequency domain."

As one embodiment, the first opportunity set comprises at least one transmission opportunity of the first CSI-RS resource that is not later than the CSI reference resource of the first CSI reporting and that does not belong to the reference time domain resource set in time domain.

As one embodiment, the first opportunity set comprises at least one transmission opportunity of the first CSI-RS resource that is not later than a CSI reference resource of the first CSI reporting, and that satisfies "it does not belong to the reference time domain resource set in time domain, or belongs to the reference time domain resource set in time domain but is orthogonal to the reference frequency domain resource set in frequency domain."

As one embodiment, the first opportunity set comprises one latest transmission opportunity of the first CSI-RS resource that is not later than the CSI reference resource of the first CSI reporting and that does not belong to the reference time domain resource set in time domain.

As one embodiment, the first opportunity set comprises one latest transmission opportunity of the first CSI-RS resource that is no later than the CSI reference resource of the first CSI reporting and that satisfies "it does not belong to the reference time domain resource set in time domain, or belongs to the reference time domain resource set in time domain but is orthogonal to the reference frequency domain resource set in frequency domain."

As one embodiment, the reference frequency domain resource set comprises part or all of RBs of one DL BWP.

As one embodiment, the reference frequency domain resource set comprises part of RBs of one DL BWP.

As one embodiment, the reference frequency domain resource set comprises part or all of RBs of a DL BWP where the first RS resource set is located.

As one embodiment, the reference frequency domain resource set comprises part or all of RBs of a serving cell where the first RS resource set is located.

As one embodiment, the reference frequency domain resource set comprises part of RBs of a DL BWP where the first RS resource set is located.

As one embodiment, the reference frequency domain resource set comprises part of RBs of a serving cell where the first RS resource set is located.

As one embodiment, on one serving cell, UL transmission in one or more DL symbols of the reference time domain resource set belongs to the reference frequency domain resource set in frequency domain.

As one embodiment, on one BWP, UL transmission in one or more DL symbols of the reference time domain resource set belongs to the reference frequency domain resource set in frequency domain.

As one embodiment, on one DL BWP, UL transmission in one or more DL symbols of the reference time domain resource set belongs to the reference frequency domain resource set in frequency domain.

As one embodiment, on a serving cell where the first RS resource set is located, UL transmission in one or more DL symbols of the reference time domain resource set belongs to the reference frequency domain resource set in frequency domain.

As one embodiment, on a DL BWP where the first RS resource set is located, UL transmission in one or more DL symbols of the reference time domain resource set belongs to the reference frequency domain resource set in frequency domain.

As one embodiment, the second information block indicates the reference frequency domain resource set.

As one embodiment, "the second information block indicates the reference frequency domain resource set" refers to: the second information block explicitly indicates the reference frequency domain resource set.

As one embodiment, "the second information block indicates the reference frequency domain resource set" refers to: the second information block implicitly indicates the reference frequency domain resource set.

As one embodiment, the second information block indicates a reference frequency domain resource pool, and the reference frequency domain resource set belongs to the reference frequency domain resource pool.

As one embodiment, the second information block indicates a reference frequency domain resource pool, and the reference frequency domain resource set comprises at least one RB in the reference frequency domain resource pool that overlaps with one DL BWP.

As one embodiment, the second information block indicates a reference frequency domain resource pool, and the reference frequency domain resource set comprises all RBs in the reference frequency domain resource pool that overlap with one DL BWP.

As one embodiment, the second information block indicates a reference frequency domain resource pool, and the reference frequency domain resource set comprises at least one RB in the reference frequency domain resource pool that overlaps with a DL BWP where the first RS resource set is located.

As one embodiment, the second information block indicates a reference frequency domain resource pool, and the reference frequency domain resource set comprises all RBs in the reference frequency domain resource pool that overlap with a DL BWP where the first RS resource set is located.

## Embodiment 9

Embodiment 9 illustrates a schematic diagram of a first CSI reporting configuration indicating a target power control offset according to one embodiment of the present application; as shown in FIG. 9.

In embodiment 9, the first CSI reporting configuration further indicates which of the first power control offset and the second power control offset the target power control offset is equal to.

As one embodiment, the first CSI reporting configuration indicates that the target power control offset is equal to the first power control offset.

As one embodiment, the first CSI reporting configuration indicates that the target power control offset is equal to the second power control offset.

As one embodiment, the first power control offset is equal to the second power control offset.

As one embodiment, the first power control offset is not equal to the second power control offset.

As one embodiment, the first power control offset is powerControlOffset.

As one embodiment, the first CSI reporting configuration indicates that the target power control offset is equal to the first power control offset, and the target power control is powerControlOffset.

As one embodiment, the first CSI reporting configuration indicates that the target power control offset is equal to the second power control offset, and the target power control is not powerControlOffset.

**Embodiment 10**

Embodiment 10 illustrates a schematic diagram of first signaling indicating a target power control offset according to one embodiment of the present application; as shown in FIG. 10.

In Embodiment 10, the first receiver receives first signaling, wherein the first signaling indicates which of the first power control offset and the second power control offset the target power control offset is equal to.

As one embodiment, the first signaling comprises part of fields of one RRC IE.

As one embodiment, the first signaling is MAC CE signaling.

As one embodiment, the first signaling is physical layer signaling.

As one embodiment, the first signaling is DCI signaling.

As one embodiment, the first signaling is one piece of downlink scheduling DCI.

As one embodiment, the first signaling is one piece of dynamic signaling.

As one embodiment, the first signaling dynamically indicates which of the first power control offset and the second power control offset the target power control offset is equal to.

As one embodiment, the first signaling indicates that the target power control offset is equal to the first power control offset.

As one embodiment, the first signaling indicates that the target power control offset is equal to the second power control offset.

**Embodiment 11**

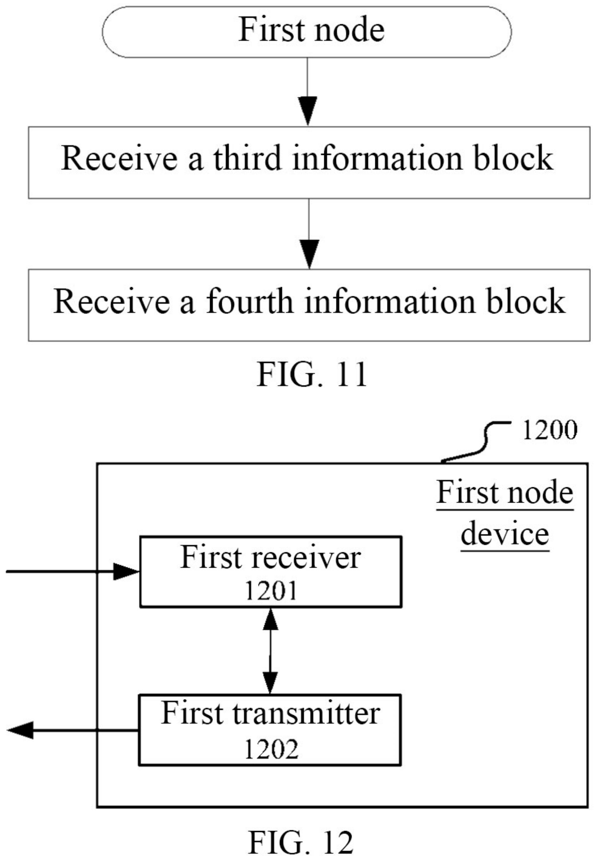

Embodiment 11 illustrates a schematic diagram of a third information block indicating a first power control offset and a fourth information block indicating a second power offset according to one embodiment of the present application; as shown in FIG. 11.

In Embodiment 11, the first receiver receives a third information block and a fourth information block, wherein the third information block indicates the first power control offset, and the fourth information block indicates the second power offset; and at least the third information block of the third information block and the fourth information block belongs to configuration information of the first CSI-RS resource.

As one embodiment, the third information block and the fourth information block both belong to the configuration information of the first CSI-RS resource.

As one embodiment, the third information block belongs to the configuration information of the first CSI-RS resource, and the fourth information block does not belong to the configuration information of the first CSI-RS resource.

As one embodiment, the third information block explicitly indicates the first power control offset.

As one embodiment, the third information block implicitly indicates the first power control offset.

As one embodiment, the fourth information block explicitly indicates the second power offset.

As one embodiment, the fourth information block implicitly indicates the second power offset.

As one embodiment, the third information block is carried by RRC signaling.

As one embodiment, the third information block comprises part or all of fields in one RRC IE.

As one embodiment, the third information block comprises part of fields in one RRC IE.

As one embodiment, the third information block comprises a powerControlOffset field in IE NZP-CSI-RS-Resource.

As one embodiment, the third information block comprises part of fields in IE NZP-CSI-RS-Resource.

As one embodiment, the third information block and the fourth information block both belong to IE NZP-CSI-RS-Resource.

As one embodiment, the third information block and the fourth information block both belong to the same RRC IE.

As one embodiment, the third information block and the fourth information block respectively belong to different RRC IEs.

As one embodiment, the third information block and the fourth information block are carried by the same signaling.

As one embodiment, the third information block and the fourth information block are respectively carried by different signaling.

As one embodiment, the third information block comprises a higher-layer parameter powerControlOffset.

As one embodiment, a name of the third information block comprises powerControlOffset.

As one embodiment, a name of the third information block comprises power.

As one embodiment, the third information block is carried by MAC CE signaling.

As one embodiment, the third information block is carried by physical layer signaling.

As one embodiment, the third information block is carried by DCI signaling.

As one embodiment, the third information block comprises one field in one piece of DCI.

As one embodiment, the third information block comprises one or more fields in one piece of DCI.

As one embodiment, the third information block comprises a CSI request field in one piece of DCI.

As one embodiment, the third information block comprises at least one field in one piece of DCI that is different from the CSI request field.

As one embodiment, the third information block comprises a CSI request field and at least one field different from the CSI request field in one piece of DCI.

As one embodiment, the first CSI reporting is aperiodic, the first CSI reporting is triggered by one piece of DCI, and the one piece of DCI comprises the third information block.

As one sub-embodiment of the above embodiment, the third information block comprises a CSI request field in the one piece of DCI.

As one sub-embodiment of the above embodiment, the third information block comprises at least one field in the one piece of DCI that is different from the CSI request field.

As one sub-embodiment of the above embodiment, the third information block comprises the CSI request field in the one piece of DCI and at least one field in the one piece of DCI that is different from the CSI request field.

As one embodiment, the first CSI reporting is aperiodic, the first CSI reporting is triggered by one piece of DCI, the one piece of DCI comprises the third information block, the third information block is the CSI request field, the third information block of the one piece of DCI is used for indicating a trigger state, and the trigger state indicates the first CSI reporting configuration.

As one embodiment, the fourth information block is carried by higher-layer signaling.

As one embodiment, the fourth information block is carried by RRC signaling.

As one embodiment, the fourth information block comprises part or all of fields in one RRC IE.

As one embodiment, the fourth information block comprises part of fields in one RRC IE.

As one embodiment, a name of the fourth information block comprises power.

As one embodiment, the fourth information block is carried by MAC CE signaling.

As one embodiment, the fourth information block is carried by physical layer signaling.

As one embodiment, the fourth information block is carried by DCI signaling.

As one embodiment, the fourth information block comprises one field in one piece of DCI.

As one embodiment, the fourth information block comprises one or more fields in one piece of DCI.

As one embodiment, the fourth information block comprises a CSI request field in one piece of DCI.

As one embodiment, the fourth information block comprises at least one field in one piece of DCI that is different from a CSI request field.

As one embodiment, the fourth information block comprises a CSI request field and at least one field different from the CSI request field in one piece of DCI.

As one embodiment, the first CSI reporting is aperiodic, the first CSI reporting is triggered by one piece of DCI, and the one piece of DCI comprises the fourth information block.

As one sub-embodiment of the above embodiment, the fourth information block comprises a CSI request field in the one piece of DCI.

As one sub-embodiment of the above embodiment, the fourth information block comprises at least one field in the one piece of DCI that is different from the CSI request field.

As one sub-embodiment of the above embodiment, the fourth information block comprises the CSI request field in the one piece of DCI and at least one field in the one piece of DCI that is different from the CSI request field.

As one embodiment, the first CSI reporting is aperiodic, the first CSI reporting is triggered by one piece of DCI, the one piece of DCI comprises the fourth information block, the fourth information block is a CSI request field, the fourth information block of the one piece of DCI is used for indicating a trigger state, and the trigger state indicates the first CSI reporting configuration.

## Embodiment 12

Embodiment 12 illustrates a structural block diagram of a processing apparatus used in a first node device according to one embodiment of the present application, as shown in FIG. 12. In FIG. 12, a processing apparatus 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, a data source 467} in Embodiment 4.

As one embodiment, the first transmitter 1202 comprises at least one of {an antenna 452, a transmitting device 454, a transmitting processor 468, a multi-antenna transmitting processor 457, a controller/processor 459, a memory 460, a data source 467} in Embodiment 4.

A first receiver 1201 receives a first CSI reporting configuration, the first CSI reporting configuration indicating a first RS resource set, and the first RS resource set comprising one or more RS resources; and

a first transmitter 1202 sends first CSI reporting.

In Embodiment 12, a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

As one embodiment, the first node comprises:

the first receiver 1201 receiving a first information block,

wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

As one embodiment, the first node comprises:

the first receiver 1201 receiving a second information block,

wherein the second information block is used for determining a reference frequency domain resource set; and UL transmission in one or more DL symbols of the reference time domain resource set belongs to the reference frequency domain resource set in frequency domain.

As one embodiment, the first CSI reporting configuration further indicates which of the first power control offset and the second power control offset the target power control offset is equal to.

As one embodiment, the first node comprises:

the first receiver 1201 receiving first signaling,

wherein the first signaling indicates which of the first power control offset and the second power control offset the target power control offset is equal to.

As one embodiment, the first node comprises:

the first receiver 1201 receiving a third information block and a fourth information block,

wherein the third information block indicates the first power control offset, and the fourth information block indicates the second power offset; and at least the third information block of the third information block and the fourth information block belongs to configuration information of the first CSI-RS resource.

**Embodiment 13**

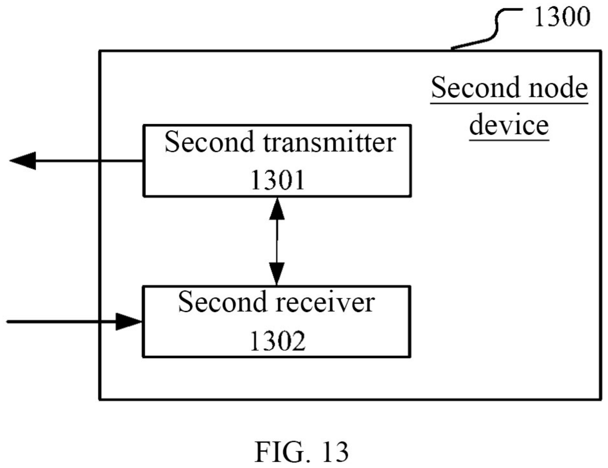

Embodiment 13 illustrates a structural block diagram of a processing apparatus used in a second node device according to one embodiment of the present application, as shown in FIG. 13. In FIG. 13, a processing apparatus 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, a memory 476} in Embodiment 4.

As one embodiment, the second receiver 1302 comprises at least one of {an antenna 420, a receiving device 418, a receiving processor 470, a multi-antenna receiving processor 472, a controller/processor 475, a memory 476} in Embodiment 4.

A second transmitter 1301 sends a first CSI reporting configuration, the first CSI reporting configuration indicating a first RS resource set, and the first RS resource set comprising one or more RS resources; and
a second receiver 1302 receives first CSI reporting.

In embodiment 13, a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

As one embodiment, which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

As one embodiment, the second node comprises:

the second transmitter 1301 sending first information block,
wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

As one embodiment, the second node comprises:

a second transmitter 1301 sending a second information block,
wherein the second information block is used for determining a reference frequency domain resource set; and UL transmission in one or more DL symbols of the reference time domain resource set belongs to the reference frequency domain resource set in frequency domain.

As one embodiment, the first CSI reporting configuration further indicates which of the first power control offset and the second power control offset the target power control offset is equal to.

As one embodiment, the second node comprises:

the second transmitter 1301 sending first signaling,
wherein the first signaling indicates which of the first power control offset and the second power control offset the target power control offset is equal to.

As one embodiment, the second node comprises:

the second transmitter 1301 sending a third information block and a fourth information block,
wherein the third information block indicates the first power control offset, and the fourth information block indicates the second power offset; and at least the third information block of the third information block and the fourth information block belongs to configuration information of the first CSI-RS resource.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. The user equipment, terminal and UE of the present application include, but are not limited to drones, communication modules on drones, remote-controlled aircraft, aircraft, small aircraft, mobile phones, tablet computers, laptops, vehicle-mounted communication devices, radio sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes, but is not limited to, macro cellular base stations, micro cellular base stations, Femtocells, relay base stations, gNBs (NR nodes B), TRPs (Transmitter Receiver Points) and other wireless communication devices.

The above is only a preferred embodiment of the present application and is not used to limit the scope of protection of the present application. For any changes and modifications made based on the embodiments described in the specification, if similar partial or all technical effects can be obtained, it should be regarded as obvious and within the scope of the protection of the present invention.

**Claims**

1. A first node used for wireless communication, comprising:

a first receiver receiving a first CSI reporting configuration, the first CSI reporting configuration indicating a first RS resource set, and the first RS resource set comprising one or more RS resources; and
a first transmitter sending first CSI reporting,
wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

2. The first node according to claim 1, wherein which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

3. The first node according to claim 2, comprising:

the first receiver receiving a first information block,
wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

**4.** The first node according to claim 3, comprising:

the first receiver receiving a second information block,
wherein the second information block is used for determining a reference frequency domain resource set; and UL transmission in one or more DL symbols of the reference time domain resource set belongs to the reference frequency domain resource set in frequency domain.

**5.** The first node according to any one of claims 1 to 4, wherein the first CSI reporting configuration further indicates which of the first power control offset and the second power control offset the target power control offset is equal to.

**6.** The first node according to any one of claims 1 to 5, comprising:

the first receiver receiving first signaling,
wherein the first signaling indicates which of the first power control offset and the second power control offset the target power control offset is equal to.

**7.** The first node according to any one of claims 1 to 6, comprising:

the first receiver receiving a third information block and a fourth information block,
wherein the third information block indicates the first power control offset, and the fourth information block indicates the second power offset; and at least the third information block of the third information block and the fourth information block belongs to configuration information of the first CSI-RS resource.

**8.** A second node used for wireless communication, comprising:

a second transmitter sending a first CSI reporting configuration, the first CSI reporting configuration indicating a first RS resource set, and the first RS resource set comprising one or more RS resources; and
a second receiver receiving first CSI reporting,
wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

**9.** The second node according to claim 8, wherein which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

**10.** The second node according to claim 9, comprising: the second transmitter sending a first information block, wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

**11.** The second node according to claim 10, comprising: the second transmitter sending a second information block, wherein the second information block is used for determining a reference frequency domain resource set; and UL transmission in one or more DL symbols of the reference time domain resource set belongs to the reference frequency domain resource set in frequency domain.

**12.** The second node according to any one of claims 8 to 11, wherein the first CSI reporting configuration further indicates which of the first power control offset and the second power control offset the target power control offset is equal to.

13. The second node according to any one of claims 8 to 12, comprising: the second transmitter sending first signaling, wherein the first signaling indicates which of the first power control offset and the second power control offset the target power control offset is equal to.

14. The second node according to any one of claims 8 to 13, comprising: the second transmitter sending a third information block and a fourth information block, wherein the third information block indicates the first power control offset, and the fourth information block indicates the second power offset; and at least the third information block of the third information block and the fourth information block belongs to configuration information of the first CSI-RS resource.

15. A method for a first node used for wireless communication, comprising:

   receiving a first CSI reporting configuration, the first CSI reporting configuration indicating a first RS resource set, and the first RS resource set comprising one or more RS resources; and
   sending first CSI reporting,
   wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

16. The method according to claim 15, wherein which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

17. The method according to claim 16, comprising: receiving a first information block, wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

18. The method according to claim 17, comprising: receiving a second information block, wherein the second information block is used for determining a reference frequency domain resource set; and UL transmission in one or more DL symbols of the reference time domain resource set belongs to the reference frequency domain resource set in frequency domain.

19. The method according to any one of claims 15 to 18, wherein the first CSI reporting configuration further indicates which of the first power control offset and the second power control offset the target power control offset is equal to.

20. The method according to any one of claims 15 to 19, comprising: receiving first signaling, wherein the first signaling indicates which of the first power control offset and the second power control offset the target power control offset is equal to.

21. The method according to any one of claims 15 to 20, comprising: receiving a third information block and a fourth information block, wherein the third information block indicates the first power control offset, and the fourth information block indicates the second power offset; and at least the third information block of the third information block and the fourth information block belongs to configuration information of the first CSI-RS resource.

22. A method for a second node used for wireless communication, comprising:

   sending a first CSI reporting configuration, the first CSI reporting configuration indicating a first RS resource set, and the first RS resource set comprising one or more RS resources; and
   receiving first CSI reporting,

wherein a first opportunity set comprises at least one transmission opportunity, which is not later than that of a CSI reference resource of the first CSI reporting, of at least one RS resource in the first RS resource set, and the first opportunity set is used for obtaining channel measurement used for calculating the first CSI reporting; the first CSI reporting comprises information indicating a first CSI-RS resource, and the first CSI-RS resource is one CSI-RS resource in the first RS resource set; and a target power control offset is a ratio of a PDSCH EPRE used in the calculation of the first CSI reporting to an EPRE of the first CSI-RS resource, candidates of the target power control offset comprise a first power control offset and a second power control offset, and both the first power control offset and the second power control offset are indicated to the first CSI-RS resource.

23. The method according to claim 22, wherein which of the first power control offset and the second power control offset the target power control offset is equal to depends on whether a first time domain resource belongs to a reference time domain resource set; when the first time domain resource and the reference time domain resource set are orthogonal, the target power control offset is equal to the first power control offset; and when the first time domain resource belongs to the reference time domain resource set, the target power control offset is equal to the second power control offset.

24. The method according to claim 23, comprising: sending a first information block, wherein the first information block is used for determining the reference time domain resource set, the reference time domain resource set comprises one or more symbols, at least one symbol in the reference time domain resource set is configured as a DL by a higher-layer parameter, and one or more subcarriers in the one or more symbols in the reference time domain resource set that are configured as DLs by the higher-layer parameter are used for uplink transmission.

25. The method according to claim 24, comprising: sending a second information block, wherein the second information block is used for determining a reference frequency domain resource set; and UL transmission in one or more DL symbols of the reference time domain resource set belongs to the reference frequency domain resource set in frequency domain.

26. The method according to any one of claims 22 to 25, wherein the first CSI reporting configuration further indicates which of the first power control offset and the second power control offset the target power control offset is equal to.

27. The method according to any one of claims 22 to 26, comprising: sending first signaling, wherein the first signaling indicates which of the first power control offset and the second power control offset the target power control offset is equal to.

28. The method according to any one of claims 22 to 27, comprising: sending a third information block and a fourth information block, wherein the third information block indicates the first power control offset, and the fourth information block indicates the second power offset; and at least the third information block of the third information block and the fourth information block belongs to configuration information of the first CSI-RS resource.

```
100                    ┌─────────────────────────┐
  ╲                    │      First node         │
   ╲                   └─────────────────────────┘
                                   │
                                   ▼
        ┌──────────────────────────────────────────┐  ─ 101
        │   Receive a first CSI reporting           │
        │          configuration                    │
        └──────────────────────────────────────────┘
                                   │
                                   ▼
        ┌──────────────────────────────────────────┐  ─ 102
        │        Send first CSI reporting           │
        └──────────────────────────────────────────┘
```

FIG. 1

FIG. 2

Control plane
300

| L3 | RRC | ⌇ 306 |
| L2 | PDCP | ⌇ 304 |
| | RLC | ⌇ 303 |
| | MAC | ⌇ 302 |
| L1 | PHY | ⌇ 301 |

305 ⌇

User plane
350

| L2 | SDAP | ⌇ 356 |
| | PDCP | ⌇ 354 |
| | RLC | ⌇ 353 |
| | MAC | ⌇ 352 |
| L1 | PHY | ⌇ 351 |

355 ⌇

FIG. 3

FIG. 4

FIG. 5

Which of a first power control offset and a second power control offset a target power control offset is equal to depends on whether a first time domain resource belongs to a reference time domain resource set

When the first time domain resource and the reference time domain resource set are orthogonal

↓

The target power control offset is equal to the first power control offset

When the first time domain resource belongs to the reference time domain resource set

↓

The target power control offset is equal to the second power control offset

FIG. 6

First node

↓

Receive a first information block

FIG. 7

First node

Receive a second information block

FIG. 8

First CSI reporting configuration —Indicates→ Which of a first power control offset and a second power control offset a target power control offset is equal to

FIG. 9

First node

Receive first signaling

FIG. 10

First node

Receive a third information block

Receive a fourth information block

FIG. 11

1200

First node device

First receiver
1201

First transmitter
1202

FIG. 12

FIG. 13

## INTERNATIONAL SEARCH REPORT

| International application No. |
| --- |
| **PCT/CN2024/088198** |

| A. | CLASSIFICATION OF SUBJECT MATTER |
| --- | --- |
| | H04W 72/0446(2023.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    VEN; WPABS; CNTXT; USTXT; EPTXT; CNABS; 3GPP: 信道状态信息, CSI, 参考信号, RS, 资源, 终端, UE, 传输, 时机, 能量, 时隙, 偏移, resource, transmission, opportunity, EPRE, energy, slot, offset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114731193 A (LG ELECTRONICS, INC.) 08 July 2022 (2022-07-08) <br> entire document | 1-28 |
| A | WO 2023014123 A1 (LG ELECTRONICS, INC.) 09 February 2023 (2023-02-09) <br> entire document | 1-28 |
| A | CN 112888012 A (VIVO MOBILE COMMUNICATION CO., LTD.) 01 June 2021 (2021-06-01) <br> entire document | 1-28 |
| A | CN 115956350 A (KONINKLIJKE PHILIPS N.V.) 11 April 2023 (2023-04-11) <br> entire document | 1-28 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 May 2024** | **14 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/088198** |

| Patent document cited in search report | | | Publication date (day/month/year) | Patent family member(s) | | | Publication date (day/month/year) |
| --- | --- | --- | --- | --- | --- | --- | --- |
| CN | 114731193 | A | 08 July 2022 | US | 2022239358 | A1 | 28 July 2022 |
| | | | | US | 11515918 | B2 | 29 November 2022 |
| | | | | US | 11901993 | B1 | 13 February 2024 |
| | | | | US | 2024056154 | A1 | 15 February 2024 |
| | | | | JP | 2023508964 | A | 06 March 2023 |
| | | | | JP | 7461481 | B2 | 03 April 2024 |
| | | | | EP | 4106220 | A1 | 21 December 2022 |
| | | | | WO | 2021162517 | A1 | 19 August 2021 |
| | | | | US | 2023087177 | A1 | 23 March 2023 |
| | | | | US | 11770170 | B2 | 26 September 2023 |
| | | | | KR | 20220050936 | A | 25 April 2022 |
| | | | | KR | 102508712 | B1 | 14 March 2023 |
| WO | 2023014123 | A1 | 09 February 2023 | KR | 20240019250 | A | 14 February 2024 |
| CN | 112888012 | A | 01 June 2021 | None | | | |
| CN | 115956350 | A | 11 April 2023 | US | 2023246785 | A1 | 03 August 2023 |
| | | | | WO | 2021254954 | A1 | 23 December 2021 |
| | | | | JP | 2023533428 | A | 03 August 2023 |
| | | | | EP | 4165816 | A1 | 19 April 2023 |

Form PCT/ISA/210 (patent family annex) (July 2022)